Europäisches Patentamt

European Patent Office

Office européen des brevets

(19)

(11) Numéro de publication: **0 100 968**
**A1**

(12)
# DEMANDE DE BREVET EUROPEEN

(21) Numéro de dépôt: 83107432.3

(22) Date de dépôt: 28.07.83

(51) Int. Cl.³: **C 04 B 35/00**
**B 28 B 21/54**

(30) Priorité: 30.07.82 FR 8213320

(43) Date de publication de la demande:
22.02.84 Bulletin 84/8

(84) Etats contractants désignés:
BE DE FR GB IT NL

(71) Demandeur: CERAVER Société anonyme dite:
12, rue de la Baume
F-75008 Paris(FR)

(72) Inventeur: Tritten, Paul
9, Résidence Bel Air
F-65000 Tarbes(FR)

(72) Inventeur: Minjolle, Louis
10, rue Jeanne d'Albret
F-65000 Tarbes(FR)

(72) Inventeur: Garcera, Daniel
2bis, Bld. de l'Abattoir
F-65000 Tarbes(FR)

(72) Inventeur: Lazennec, Yvon
2, rue de la Normandie
F-65000 Tarbes(FR)

(74) Mandataire: Weinmiller, Jürgen et al,
Zeppelinstrasse 63
D-8000 München 80(DE)

(54) Procédé de fabrication d'une enceinte tubulaire spiralée, dispositif de fabrication selon ce procédé et applications de celui-ci.

(57) On prépare une pâte plastique comprenant une poudre de l'oxyde céramique, une matière thermoplastique et un liant organique, on extrude la pâte en une forme tubulaire (25), on enroule en spirale la forme tubulaire autour d'un mandrin (20) cylindrique rotatif, on sépare l'enceinte tubulaire spiralée crue du mandrin et la soumet à une cuisson entraînant la combustion du liant organique et de la matière thermoplastique, puis à un frittage. Applications à la fabrication de tubes translucides pour lampes à vapeur de sodium sous haute pression et de tubes à décharge pour lasers.

EP 0 100 968 A1

./...

Croydon Printing Company Ltd.

FIG.1

## Procédé de fabrication d'une enceinte tubulaire spiralée, dispositif de fabrication selon ce procédé et applications de celui-ci

La présente invention concerne un procédé de fabrication d'une enceinte tubulaire spiralée en oxyde céramique polycristallin. Elle s'étend en outre à un dispositif de mise en oeuvre de ce procédé et à des applications de celui-ci.

Lorsque l'on veut fabriquer des pièces de forme relativement complexe, non réalisables par simple extrusion, la technique habituelle est d'introduire la matière de la pièce dans un moule muni d'un noyau. Celle-ci nécessite des opérations successives de mise en place du noyau dans le moule, d'introduction du matériau dans le moule, de démoulage et d'élimination du noyau, puis de nettoyage du moule. Elle ne permet que des cadences de production relativement lentes.

La présente invention a pour but de procurer un procédé de fabrication d'une enceinte tubulaire spiralée qui permette des cadences de production élevées, tout en assurant une bonne qualité dimensionnelle des enceintes tubulaires spiralées.

Le procédé selon l'invention est caractérisé en ce que l'on prépare une pâte plastique comprenant une poudre de l'oxyde céramique, une matière thermoplastique et un liant organique, en ce que l'on extrude la pâte en une forme tubulaire, en ce que l'on enroule en spirale la forme tubulaire autour d'un mandrin cylindrique rotatif, en ce que l'on sépare l'enceinte tubulaire spiralée crue du mandrin et la soumet à une cuisson entraînant la combustion du liant organique et de la matière thermoplastique, puis à un frittage.

Il répond en outre de préférence à au moins l'une des caractéristiques suivantes :

- L'on imprime à la forme tubulaire à la sortie de la buse d'extrusion une déviation la dirigeant tangentiellement au pourtour du mandrin cylindrique rotatif.

- L'on imprime à la forme tubulaire la déviation par extrusion dans une buse à poinçon en sifflet.

- L'on imprime à la forme tubulaire la déviation par un chauffage dissymétrique de la pâte au cours de son extrusion.

- L'on enroule la forme tubulaire en un tube comportant une pluralité de spires, puis l'on coupe le tube spiralé le long d'une génératrice du cylindre enveloppe des spires en plusieurs éléments à une seule spire.

L'invention s'étend en outre à un dispositif de mise en oeuvre du procédé ci-dessus, comprenant une extrudeuse à poinçon axial, un mandrin cylindrique rotatif d'axe perpendiculaire à celui de l'extrudeuse, dont le pourtour muni d'au moins une rainure spiralée passe à proximité de l'orifice de sortie de l'extrudeuse.

Elle s'étend enfin à des applications particulièrement favorables du procédé, la fabrication de lampes à décharge au sodium sous haute pression, celle de tubes à décharge pour lasers et celle de stroboscopes.

Il est décrit ci-après, à titre d'exemple et en référence aux figures du dessin annexé, un procédé et un dispositif de fabrication d'enceintes tubulaires spiralées et une lampe à décharge à vapeur de sodium sous haute pression en alumine polycristalline fabriquée selon ce procédé.

La figure 1 représente en coupe une partie du dispositif selon l'invention, à savoir une extrudeuse à buse à poinçon en sifflet et la forme tubulaire à la sortie de celle-ci.

La figure 1A représente en coupe une extrudeuse à résistance de chauffage dissymétrique et la forme tubulaire à sa sortie.

La figure 1B représente vue de dessus la résistance de chauffage de la figure 1A.

La figure 2 représente une autre partie d'un dispositif selon l'invention, à savoir le mandrin cylindrique rotatif et le tube d'oxyde céramique qui s'enroule sur celui-ci.

Les figures 3A et 3B représentent respectivement en élévation de face et de profil un élément de tube, obtenu par coupe du tube selon la figure 2 enroulé sur le mandrin selon une génératrice.

La figure 4 représente une lampe à vapeur de sodium sous pression comprenant un élément de tube en oxyde céramique fabriqué par le procédé selon l'invention.

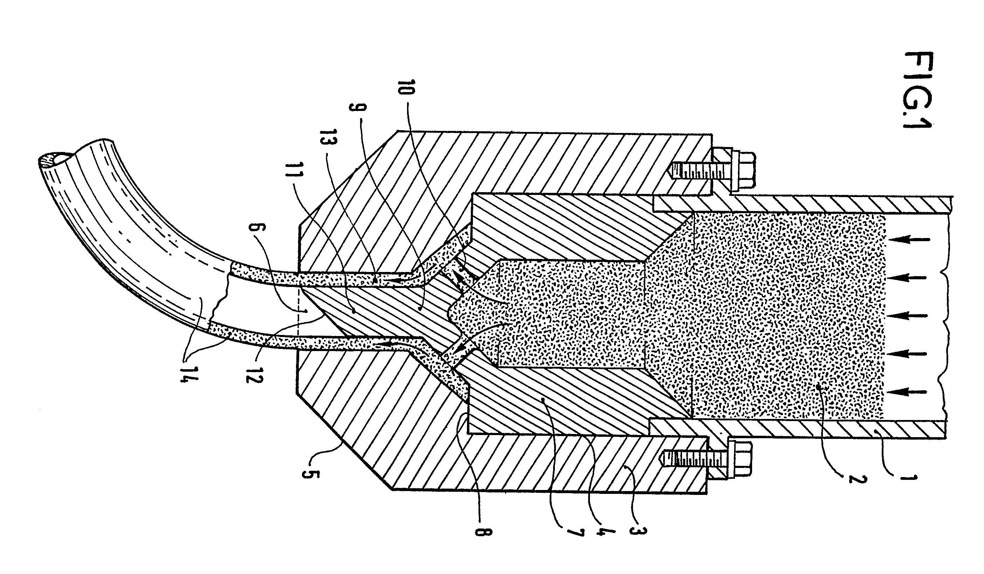

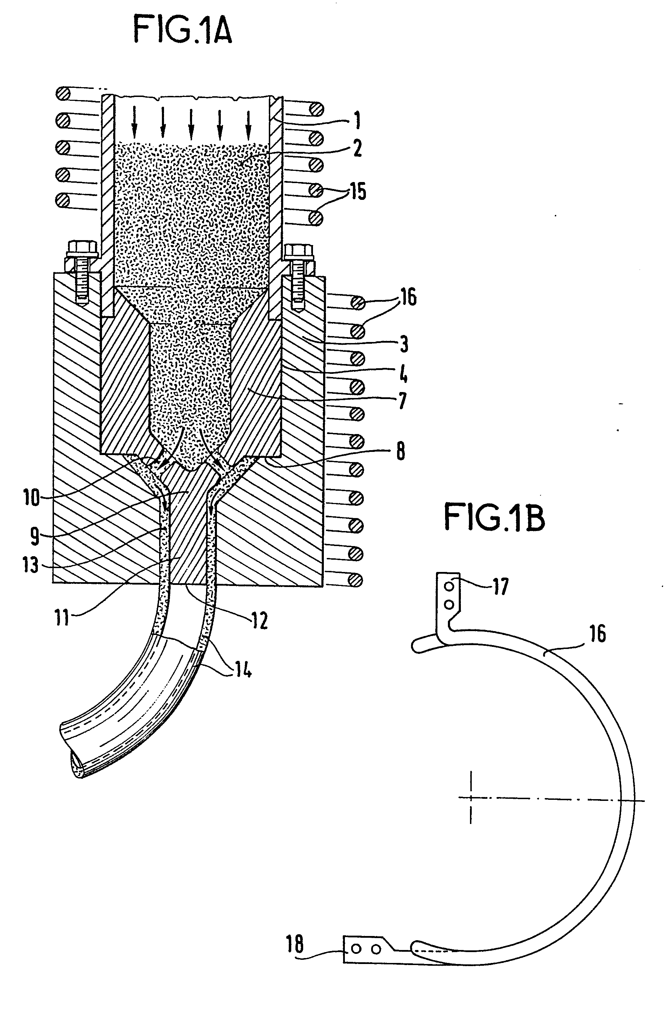

Dans la figure 1, l'extrudeuse comprend un cylindre supérieur 1 dans lequel est refoulé un mélange 2 d'un oxyde céramique, d'une matière thermoplastique et d'un liant organique par une pression, exercée par exemple par un piston, non représenté. Lorsque l'on veut fabriquer des éléments de tube en alumine polycristalline, on mélange par exemple 20 à 22% d'un liant organique formé de 14 à 15% de polystyrène, 5% d'une cire de température de volatilisation inférieure à celle du polystyrène et 2% de phtalate de dioctyle, le reste étant de la poudre d'alumine.

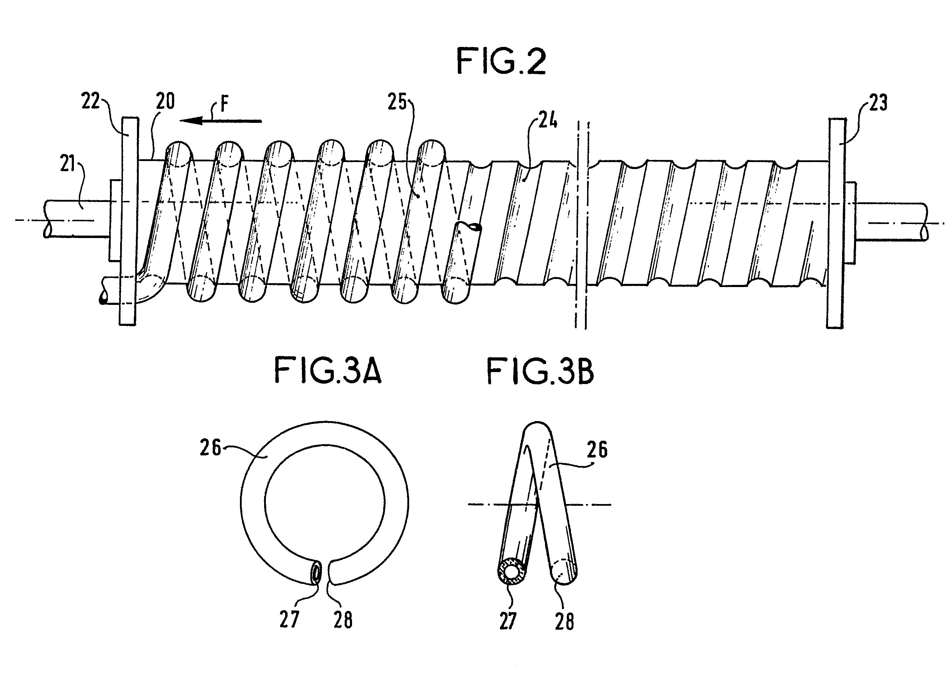

La partie inférieure de l'extrudeuse comprend une enveloppe 3 dont la partie supérieure cylindrique présente un alésage interne 4, et dont la buse inférieure tronconique est percée d'un trou cylindrique 6 de diamètre égal au diamètre externe du tube à fabriquer. Dans l'alésage 4 est disposé un corps interne 7 reposant sur l'épaulement 8 de l'enveloppe 3, et se prolongeant par une partie tronconique 9 percée de trous divergents 10, puis un poinçon cylindrique 11 se terminant par une extrémité en sifflet 12. Les trous 10 permettent à la pâte céramique de s'écouler entre l'alésage du trou 6 et la paroi du poinçon 11 du corps interne, en constituant un canal annulaire 13. Celle-ci forme à la sortie de l'extrudeuse un tube 14 qui s'incline vers la gauche de la figure, du fait de la forme en sifflet de l'extrémité 12 du poinçon, une fois guidée par le mandrin rotatif qui va être décrit en référence à la figure 2.

Dans une variante représentée sur la figure 1A, le cylindre supérieur 1 de l'extrudeuse est entouré d'une résistance de chauffage cylindrique coaxiale 15.

La partie inférieure de l'extrudeuse comprend une enveloppe cylindrique 3, munie d'un alésage interne 4. Le corps interne 7 disposé dans l'alésage 4 se prolonge par la partie tronconique 9 percée des trous divergents 10, puis par le poinçon cylindrique 11 dont l'extrémité 12 est plane. L'enveloppe 3 est entourée d'une résistance de chauffage dissymétrique 16.

Le collier de chauffage 16 n'entoure que la partie droite du pourtour de l'enveloppe entre les bornes 17 et 18 (figure 1B). Les résistances de chauffage 15 et 16 sont elles-mêmes entourées chacune d'un manchon calorifuge (non représenté). De la sorte, le mélange à extruder devient plus fluide dans la partie droite de la cavité du corps interne 7 et du canal tubulaire 13, et tend à s'écouler plus rapidement dans cette partie droite, ce qui entraîne son inclinaison vers la gauche de la figure.

Dans la figure 2, le mandrin 20, entraîné en rotation par

l'arbre 21, est animé en même temps d'un mouvement de translation rectiligne uniforme représenté par la flèche F. Il comprend une joue 22, munie d'une encoche de guidage du tube de pâte céramique, et une autre joue 23 à son autre extrémité. Il comporte à sa surface une rainure hélicoïdale 24, de profondeur de préférence inférieure au rayon externe du tube 25 à enrouler sur le mandrin, représenté seulement partiellement.

Une fois le tube enroulé sur le mandrin, il est soumis à une cuisson lui donnant une cohésion suffisante, puis retiré du mandrin.

Le tube spiralé retiré du mandrin peut être directement fritté pour certaines applications, par exemple comme serpentin d'échange de chaleur pour liquide corrosif.

Pour les applications en éclairage, on ne désire en général que des éléments à une seule spire. On coupe alors le tube spiralé cuit suivant une génératrice du cylindre circonscrit, par exemple à l'aide d'un couteau à guidage rectiligne.

On obtient des éléments tels que celui représenté en figure 3A et 3B, comportant une spire unique 26 et des faces d'extrémité 27, 28. Ces éléments sont ensuite frittés pour leur donner les propriétés mécaniques désirées.

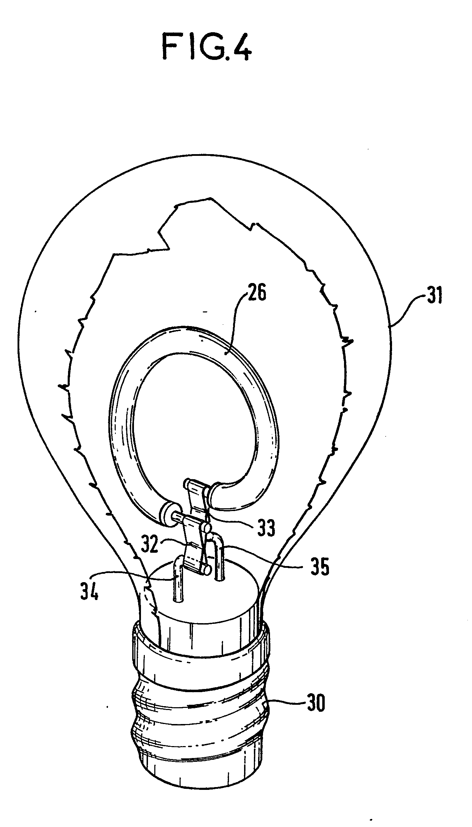

De tels éléments conviennent notamment comme tubes à décharge dans des lampes à vapeur de sodium à haute pression, telle que celle représentée avec arrachement partiel en figure 4.

La lampe comporte un culot 30 et une enveloppe en verre 31. Le tube à décharge en alumine polycristalline frittée 26 est relié par des connexions 32, 33 à des bornes d'arrivée de courant 34, 35.

Une telle lampe procure un éclairement anisotrope, maximal dans la direction du plan moyen de la spire, et de plus forte intensité qu'une lampe à tube rectiligne. Son raccordement électrique est analogue à celui d'une lampe à incandescence.

REVENDICATIONS

1/ Procédé de fabrication d'une enceinte tubulaire spiralée en oxyde céramique polycristallin, caractérisé en ce que l'on prépare une pâte plastique comprenant une poudre de l'oxyde céramique, une matière thermoplastique et un liant organique, en ce que l'on extrude la pâte en une forme tubulaire (25), en ce que l'on enroule en spirale la forme tubulaire autour d'un mandrin cylindrique rotatif (20, figure 2), en ce que l'on sépare l'enceinte tubulaire spiralée crue du mandrin et la soumet à une cuisson entraînant la combustion du liant organique et de la matière thermoplastique, puis à un frittage.

2/ Procédé selon la revendication 1, caractérisé en ce que l'on imprime à la forme tubulaire à la sortie de la buse d'extrusion une déviation la dirigeant tangentiellement au pourtour du mandrin cylindrique rotatif.

3/ Procédé selon la revendication 2, caractérisé en ce que l'on imprime à la forme tubulaire la déviation par extrusion dans une buse à poinçon en sifflet (12, figure 1).

4/ Procédé selon la revendication 2, caractérisé en ce que l'on imprime à la forme tubulaire la déviation par un chauffage dissymétrique (16, figure 1A) de la pâte au cours de son extrusion.

5/ Procédé selon l'une des revendications 1 à 4, caractérisé en ce que l'on enroule la forme tubulaire en un tube comportant une pluralité de spires, puis en ce que l'on coupe le tube spiralé le long d'une génératrice du cylindre enveloppe des spires, en plusieurs éléments à une seule spire (26, figures 3A, 3B).

6/ Dispositif de mise en oeuvre du procédé selon l'une des revendications 1 à 5, caractérisé en ce qu'il comporte une extrudeuse à poinçon axial (11, figure 1), un mandrin cylindrique rotatif (20, figure 2) d'axe perpendiculaire à celui de l'extrudeuse, dont le pourtour muni d'au moins une rainure spiralée (24) passe à proximité de l'orifice de sortie de l'extrudeuse.

7/ Dispositif selon la revendication 6, caractérisé en ce que l'extrudeuse comporte une buse à poinçon en sifflet (12, figure 1), et en ce que le mandrin rotatif est disposé latéralement par rapport au débouché de la buse, du côté le plus long du poinçon.

8/ Dispositif selon la revendication 6, caractérisé en ce que l'extrudeuse comporte un organe de chauffage (16, figure 1A) sur une partie seulement du pourtour de sa partie proche de l'orifice de sortie, et en ce que le mandrin rotatif est disposé latéralement par rapport au débouché de la buse, du côté de celui-ci ne comportant pas l'organe de chauffage.

9/ Applications du procédé selon la revendication 5 à la fabrication de tubes translucides pour lampes à vapeur de sodium sous haute pression ou de tubes à décharge pour lasers.

0100968

FIG.1

FIG.1A

FIG.1B

# FIG.2

# FIG.3A    FIG.3B

3/4

0100968

FIG.4

Office européen
des brevets

# RAPPORT DE RECHERCHE EUROPEENNE

EP 83 10 7432

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | EP-A-0 047 640 (MONSANTO) * Page 17, lignes 3-14; revendications 11,12; figure 2 * | 1,6 | C 04 B 35/00 B 28 B 21/54 |
| X | GB-A-1 443 741 (NIKEX NEHEZIPARI) * Page 1, lignes 11-17; page 4, lignes 3-15; revendications 1,4,5; figure 4 * | 1,6,9 | |
| Y | FR-A-2 299 289 (FORD FRANCE) * Revendications 1,13; figure 2 * | 1 | |
| A | US-A-2 649 642 (PETRESKY) * En entier * | 2 | |

DOMAINES TECHNIQUES RECHERCHES (Int. Cl. ³)

B 28 B
C 04 B

Le présent rapport de recherche a été établi pour toutes les revendications

| Lieu de la recherche LA HAYE | Date d'achèvement de la recherche 07-11-1983 | Examinateur BOLLEN J.A.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82